(19) Europäisches Patentamt

European Patent Office

Office européen des brevets

(11) **EP 0 676 140 B1**

(12) **EUROPEAN PATENT SPECIFICATION**

(45) Date of publication and mention
of the grant of the patent:
**29.09.1999 Bulletin 1999/39**

(51) Int. Cl.[6]: **A01N 43/80**
// (A01N43/80, 43:80)

(21) Application number: **95302021.1**

(22) Date of filing: **27.03.1995**

(54) **Halogen-free biocide**

Halogenfreies Biozid

Biocide dépourvu d'halogène

(84) Designated Contracting States:
**AT BE CH DE DK ES FR GB GR IE IT LI LU NL PT SE**
Designated Extension States:
**SI**

(30) Priority: **07.04.1994 US 224366**

(43) Date of publication of application:
**11.10.1995 Bulletin 1995/41**

(73) Proprietor:
**ROHM AND HAAS COMPANY**
**Philadelphia, Pennsylvania 19106-2399 (US)**

(72) Inventors:
• **Woodruff, Robert Alva**
**Buckingham, Pennsylvania 18912 (US)**
• **Hsu, Jemin Charles**
**Ft. Washington, Pennsylvania 19034 (US)**
• **Willingham, Gary Lewis**
**Glenside, Pennsylvania 19038 (US)**
• **Downey, Angela Bridget**
**Lansdale, Pennsylvania 19446 (US)**
• **Williams, Terry Michael**
**Ambler, Pennsylvania 19002 (US)**

(74) Representative:
**Buckley, Guy Julian et al**
**ROHM AND HAAS (UK) LTD.**
**European Operations Patent Department**
**Lennig House**
**2 Mason's Avenue**
**Croydon CR9 3NB (GB)**

(56) References cited:
**EP-A- 0 363 011        EP-A- 0 375 367**
**EP-A- 0 544 418        US-A- 4 822 511**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

**Description**

This invention relates to combinations of microbicide compounds.

Several species of 3-isothiazolone compounds have been commercialized and are widely used to inhibit the growth of bacteria, fungi, and algae. By far the most widely used species is a 75 to 25 mixture of 5-chloro-2-methyl-3-isothiazolone (CMI) and 2-methyl-3-isothiazolone (MI). Other commercially used species are 2-n-octyl-3-isothiazolone (OI) and 4,5-dichloro-2-octyl-3-isothiazolone (DI).

Japanese Kokai Hei 01-311006 discloses certain combinations of 3-isothiazolone biocidal compounds for which synergy is claimed. According to said Kokai, one 3-isothiazolone from a first group is combined with one from a second group. In the examples of the Kokai, the compound from the first group is always a 5-chloro species. The Kokai further teaches that CMI has more than 10 times the antimicrobial activity of MI.

EP 0363011 A discloses a synergistic combination with a decreased sensitisation potential and a reduced content of a halogenated compound. The combination contains instead of the commercially available combination of CMI and MI only 1.2 to 25.4 % of the former and 74.6 to 98.8% of the latter. US 4822511 A describes a synergistic mixture of the above mentioned commercially available combination with OI.

Because of recently proposed legislation which would outlaw the use of halogenated compounds in discharge from industrial processes, a need has arisen for effective biocides which are not halogenated.

Accordingly, the present invention provides in a first aspect a biocide composition comprising 2-methyl-3-isothiazolone and 2-n-octyl-3-isothiazolone in a synergistic ratio which exhibits improved control against fungi and bacteria, wherein said composition is free of halogenated compounds. The present invention also provides a method for controlling microbial growth at a locus comprising introducing on, at, or into said locus a microbicidally effective amount of such composition. A further aspect of the invention is the use of the above composition to control microbial growth.

MI and OI are synergistic in weight ratios of between about 500:1 to about 1:100. The preferred weight ratio of the two isothiazolone compounds is about 1:20 to 20:1, more preferably 1:10 to 10:1. The two compounds can be dissolved in a solvent system, preferably at a concentration of about 1 to 80 parts by weight per 100 parts of solvent system. The OI is only slightly soluble in water, whereas the MI is fully soluble in water. Appropriate solvent systems depend on the concentration of OI and the ratio of OI to MI. The solvent systems can thus comprise 0 to 100% water, and 100 to 0% organic solvent, preferably glycol such as dipropylene glycol ad/or propylene glycol. The OI and MI can be added to the locus separately, and not necessarily in the same solvent systems as each other. When the OI and MI are to be premixed, the solvent system must take into account the respective solubilities of the OI and MI.

While a small amount of halogenated biocide may be included, it is preferred that none be present.

The novel combination of isothiazolones has been found to be very effective in a variety of loci, e.g., metalworking fluid, cosmetics and polymer emulsions. Concentrations of biocide composition are preferably about 1 to 400 ppm based on locus. Metalworking fluids are well known to comprise lubricant, corrosion inhibitor, and biocide. The preferred amount of MI in metalworking fluids is about 5 to 300 ppm, and the preferred amount of OI is 5 to 100 ppm, with the most preferred ratio of MI:OI being from 3:1 to 1:1.

The same use levels and ratios are suitable for mineral slurries, papermill slimicides, starch slurries, fuel, cooling water, oilfield treatment, electrocoat paint, ballast water, photoprocessing, as an algaecide in fountains, cooling water and spray wash.

In the field of paints, the biocidal combination of the invention can be used as a bactericide, fungicide and/or algaecide in paints which are especially useful for decorative, fishnet and anti-foulant applications. When used in conjunction with polymer emulsions, the compositions comprise water, emulsion polymer and an effective amount of the biocidal composition. The polymer emulsions usually have a pH of at least 7, often at least 9.

In certain applications, it is preferred to avoid the use of metal salt stabilizer which is normally used in the aforementioned most widely used species. Preferred compositions are essentially or completely free of such stabilizer.

Example 1 - Improved Performance

The bacterial inoculum used in the following examples consisted of a contaminated metal working fluid supplemented with *Pseudomonas oleovorans* cells suspended at a 9:1 ratio. The fluid was contaminated with bacteria only. *Pseudomonas oleovorans* was grown on a Trypticase Soy Agar slant and incubated at 30°C for 24 hours. The cell suspension was obtained by washing the slant with 0.1M phosphate buffer. This inoculum was mixed at equal levels with the following organisms prior to use.

|  | ATCC # |
|---|---|
| *Pseudomonas aeruginosa* | 15442 |
| *Proteus mirabilis* | 4675 |
| *Enterobacter cloacae* | 529 |
| *Citrobacter freundii* | 6750 |
| *Escherichia coli* | 11229 |
| *Klebsiella pneumoniae* | 13883 |
| *Candida albicans* | from Europe |

The above cultures were maintained in an equal parts mixture of a soluble, semi-synthetic and synthetic metal working fluid. The combined inoculum provided approximately $10^7$ cells/ml of test sample.

The combined fungal inoculum consisted of the following six fungi; *Cephalosporium* sp., *Fusarium* sp., *Trichosporon* sp., CT 808 Isolate, Delco Moraine Isolate, and Pillsbury P5353 Isolate. The fungi were maintained separately in metal working fluid and combined at equal levels prior to use. The combined inoculum provided approximately $10^5$ to $10^6$ cells/ml of test sample.

Aliquots of a semi-synthetic metal working fluid were treated with 0, 7.5, 12.5, 25, 37.5, and 50 ppm OI in combination with 0, 7.5, 12.5, 25, 37.5, and 50 ppm respectively of either MI, CMI, EI, or CEI. The samples were then heat-aged at 30°C for 1 week. After heat ageing, the samples were inoculated with the mixed bacterial or the mixed fungal inocula separately.

The inoculated samples were incubated at 25°C and evaluated weekly for microbial growth using a serial dilution method. After sampling, the samples were innoculated with bacteria and fungi on a weekly basis. Multiple challenge tests demonstrate the potential for a single biocide dose to control repeated inoculation (contamination) as encountered in the field.

Samples which contained < $10^3$ colony forming units ("cfu")/ml bacteria and < 10 cfu/ml fungi were considered to be effectively preserved. Table 1 shows the weeks of control of bacteria provided by these combinations. Table 2 shows the weeks of control of fungi provided by these combinations.

Table 1

| Weeks of Bacterial Control | | | | |
|---|---|---|---|---|
| Combination | 13 + 13 ppm | 25 + 25 ppm | 38 + 38 ppm | 50 + 50 ppm |
| OI + MI (invention) | 1 | 10 | 13 | 14 |
| OI + CMI (comparative) | <1 | <1 | <1 | <1 |
| OI + EI (comparative) | 2 | 4 | 5 | 14 |
| OI + CEI (comparative) | 2 | 3 | 6 | 14 |

Table 2

| Weeks of Fungal Control | | | | |
|---|---|---|---|---|
| Combination | 13 + 13 ppm | 25 + 25 ppm | 38 + 38 ppm | 50 + 50 ppm |
| OI + MI (invention) | 2 | 10 | 12 | 14 |
| OI + CMI (comparative) | 1 | 11 | 11 | 14 |
| OI + EI (comparative) | 5 | 10 | 11 | 14 |

Table 2 (continued)

| Weeks of Fungal Control | | | | |
|---|---|---|---|---|
| Combination | 13 + 13 ppm | 25 + 25 ppm | 38 + 38 ppm | 50 + 50 ppm |
| OI + CEI (comparative) | 3 | 10 | 13 | 14 |

It is surprising that OI and MI, which are both non-halogenated, can be as effective in controlling bacteria and fungi as the chlorinated analogues, and that in lower concentrations, the OI/MI combinations were found to be effective over a longer period than combinations of OI with either CMI, 2-ethyl-3-isothiazolone (EI) or 5-chloro-2-ethyl-3-isothiazolone (CEI).

## Example 2 - Synergy

MIC values represent the Minimum Inhibitory Concentration. This is defined as the lowest level of compound required to completely inhibit the growth of a given organism.

A synergistic effect is defined as the response of two variables which is greater than the sum of both parts alone. Synergy was determined from combination studies with MI and OI by the method of calculation described by F. C. Kull et al., *Applied Microbiology*, 9, 538 (1961):

$$Q_a/Q_A + Q_b/Q_B = SI \text{ (synergy index)}$$

where:

$Q_A$ is the quantity of compound A, acting alone, producing an end point (MIC)
$Q_a$ is the quantity of compound A, in mixture, which inhibits growth
$Q_B$ is the quantity of compound B, acting alone, producing an end point (MIC)
$Q_b$ is the quantity of compound B, in mixture, which inhibits growth.

When SI is greater than 1, antagonism is demonstrated. When SI equals 1, the effect is additive, and when SI is less than 1, synergy is demonstrated.

Studies were conducted on *Chlorella pyrenoidosa* (a green alga) with MI and OI. The MIC studies were conducted using microtiter plate assays. In this method, a wide range of concentrations was tested by preparing two-fold serial dilutions of the compound in a 96-well plastic microtiter plate. All liquid media transfers were performed with calibrated single or multichannel digital pipetters. Stock solutions of the compounds were prepared in appropriate solvents and dispensed to the growth medium (Allen's media) which had a pH of 7. All subsequent dilutions in the plate were made using Allen's media; total volume of liquid in each well was 100 μl. The plate contained a concentration of both compounds made by serially titrating equal volumes of liquids in two directions in the microtiter plate. The plate contained a control row for each combination (one component only), hence, the individual compound MIC values were also determined.

The culture of *Chlorella pyrenoidosa* was inoculated into the microtiter plate using a 96-prong multiple inoculator (5 μl inoculum); each well received a standard suspension of biomass (5% inoculum). The plate was incubated at 25°C under constant illumination (500 ft candles). The extent of growth was determined under low magnification with the aid of a microtiter plate reader. Growth/no-growth in each well was recorded after 7 days. The results are reported in Table 3.

Table 3

| MI and OI Synergy Determination Against *Chlorella pyrenoidosa* Compound A= MI, Compound B = OI | | | |
|---|---|---|---|
| $Q_a$ (ppm) | $Q_b$ (ppm) | A:B | SI |
| 3.14 ($Q_A$) | 0 | - | - |
| 1.57 | 0.27 | 6:1 | 0.75 |
| " | 0.13 | 12:1 | 0.62 |

Table 3 (continued)

| MI and OI Synergy Determination Against *Chlorella pyrenoidosa* | | | |
|---|---|---|---|
| Compound A= MI, Compound B = OI | | | |
| $Q_{a\ (ppm)}$ | $Q_{b\ (ppm)}$ | A:B | SI |
| " | 0.067 | 23:1 | 0.56 |
| " | 0.0335 | 47:1 | 0.53 |
| " | 0.0168 | 93:1 | 0.52 |
| " | 0.0084 | 187:1 | 0.50 |
| " | 0.0042 | 374:1 | 0.50 |
| 0.79 | 0.54 | 1.5:1 | 0.75 |
| " | 0.27 | 3:1 | 0.50 |
| " | 0.13 | 6:1 | 0.37 |
| " | 0.067 | 12:1 | 0.31 |
| " | 0.0335 | 24:1 | 0.25 |
| 0 | 1.07 ($Q_B$) | - | - |

The synergistic ratios of A:B range from 374:1 to 1.5:1.

Example 3 - Synergy

Studies were conducted on *Pseudomonas aeruginosa* (P. aeruginosa) and *Escherichia coli* (E. coli) with MI and OI at varying pH. These tests were conducted as described in Example 2 with the following changes: the media was potato dextrose broth (PDB), pH 5, either unadjusted or adjusted to pH 9.5 with 0.2 M CHES buffer. The total volume of liquid in each well was 150 µl, and the plates were incubated at 25°C without illumination. The results are reported in Table 4.

Table 4

| MI and OI Synergy Determination Against *P. aeruginosa* and *E. coli* at pH 9.5 | | | | |
|---|---|---|---|---|
| Compound A= MI, Compound B = OI | | | | |
| Organism | $Q_a$ (ppm) | $Q_b$ (ppm) | A:B | SI |
| P. aeruginosa | 12.5 ($Q_A$) | 0 | - | - |
| | 6.2 | 6.2 | 1:1 | 0.74 |
| | " | 3.1 | 2:1 | 0.62 |
| | " | 1.6 | 4:1 | 0.56 |
| | 3.1 | 12.5 | 1:4 | 0.75 |
| | 0 | >25 ($Q_B$) | - | - |

Table 4 (continued)

| MI and OI Synergy Determination Against *P. aeruginosa* and *E. coli* at pH 9.5 Compound A= MI, Compound B = OI | | | | |
|---|---|---|---|---|
| Organism | $Q_a$ (ppm) | $Q_b$ (ppm) | A:B | SI |
| E. coli | 12.5 ($Q_A$) | 0 | - | - |
| | 6.2 | 1.6 | 4:1 | 0.75 |
| | " | 0.8 | 8:1 | 0.63 |
| | " | 0.4 | 16:1 | 0.56 |
| | 3.1 | 3.1 | 1:1 | 0.75 |
| | " | 1.6 | 2:1 | 0.51 |
| | " | 0.8 | 4:1 | 0.38 |
| | " | 0.4 | 8:1 | 0.31 |
| | 1.6 | 3.1 | 2:1 | 0.63 |
| | " | 1.6 | 1:1 | 0.39 |
| | " | 0.8 | 2:1 | 0.26 |
| | 0.8 | 3.1 | 4:1 | 0.56 |
| | " | 1.6 | 1:2 | 0.32 |
| | " | 0.8 | 1:1 | 0.19 |
| | " | 0.4 | 2:1 | 0.13 |
| | 0.4 | 3.1 | 1:8 | 0.53 |
| | " | 1.6 | 1:4 | 0.29 |
| | 0.2 | 3.1 | 1:16 | 0.52 |
| | 0 | 6.2 ($Q_B$) | - | - |

The synergistic ratios of A:B range from 16:1 to 1:16.

It was surprising to find synergy at pH 9.5. No synergy was found at pH 5.

<u>Example 4 - Synergy</u>

Synergy studies were conducted on the variety of bacteria listed below with MI and OI. These tests were conducted as described in Example 2 with the following changes: the media was Trypticase Soy Broth (TSB) (pH 7), the total volume of liquid in each well was 150 µl, and the plates were incubated at 25° C without illumination. The results are reported in Table 5.

| Organisms Tested | |
|---|---|
| *Escherichia coli* | (E. coli) |
| *Pseudomonas oleovorans* | (P. oleovorans) |
| *Pseudomonas aeruginosa* | (P. aeruginosa) |
| *Enterobacter aerogenes* | (E. aerogenes) |
| *Serratia marcesans* | (S. marcesans) |
| *Pseudomonas cepacia* | (P. cepacia) |

(continued)

| Organisms Tested | |
|---|---|
| *Pseudomonas cepacia* | (P. putida) |
| *Pseudomonas oxalicum* | (P. oxalicum) |

**Table 5**

**MI and OI Synergy Determination Against Various Organisms**

**Compound A= MI, Compound B = OI**

| Organism | $Q_a$ (ppm) | $Q_b$ (ppm) | A:B | SI |
|---|---|---|---|---|
| E. coli | 31 ($Q_A$) | 0 | - | - |
| | 16 | 16 | 1:1 | 0.64 |
| | 16 | 31 | 1:2 | 0.76 |
| | 8 | 31 | 1:4 | 0.51 |
| | 8 | 62 | 1:8 | 0.75 |
| | 4 | 62 | 1:16 | 0.63 |
| | 0 | 125 ($Q_B$) | - | - |

| Organism | Qa (ppm) | Qb (ppm) | A:B | SI |
|---|---|---|---|---|
| P. oleovorans | 8 (QA) | 0 | - | - |
| | 4 | 16 | 1:4 | 0.76 |
| | 2 | 31 | 1:16 | 0.75 |
| | 1 | 31 | 1:31 | 0.63 |
| | 0.5 | 31 | 1:64 | 0.56 |
| | 0 | 62 (QB) | - | - |
| P. aeruginosa | 125 (QA) | 0 | - | - |
| | 62 | 31 | 2:1 | 0.74 |
| | 31 | 31 | 1:1 | 0.50 |
| | 31 | 62 | 1:2 | 0.74 |
| | 0 | 125 (QB) | - | - |
| E. aerogenes | 31 (QA) | 0 | - | - |
| | 16 | 62 | 1:4 | 0.64 |
| | 16 | 125 | 1:8 | 0.77 |
| | 8 | 250 | 1:31 | 0.76 |
| | 0 | 500 (QB) | - | - |
| S. marcesans | 125 (QA) | 0 | - | - |
| | 62 | 31 | 2:1 | 1.0 |
| | 31 | 31 | 1:1 | 0.75 |
| | 0 | 62 (QB) | - | - |
| P. cepacia | 31 (QA) | 0 | - | - |
| | 16 | 16 | 1:1 | 0.58 |
| | 16 | 31 | 1:2 | 0.64 |
| | 16 | 62 | 1:4 | 0.76 |
| | 8 | 125 | 1:16 | 0.76 |
| | 0 | 250 (QB) | - | - |
| P. putida | 62 (QA) | 0 | - | - |
| | 31 | 62 | 1:2 | 0.62 |
| | 31 | 125 | 1:4 | 0.75 |
| | 16 | 125 | 1:8 | 0.51 |
| | 16 | 250 | 1:16 | 0.76 |
| | 8 | 250 | 1:32 | 0.63 |
| | 0 | 500 (QB) | - | - |

| Organism | Q$_a$ (ppm) | Q$_b$ (ppm) | A:B | SI |
|----------|-------------|-------------|-----|-----|
| P. oxalicum | 125 (Q$_A$) | 0 | - | - |
| | 62 | 8 | 8:1 | 0.63 |
| | 62 | 16 | 4:1 | 0.75 |
| | 31 | 8 | 4:1 | 0.38 |
| | 31 | 16 | 2:1 | 0.51 |
| | 31 | 31 | 1:1 | 0.75 |
| | 16 | 31 | 1:2 | 0.63 |
| | 0 | 62 (Q$_B$) | - | - |

The synergistic ratios of A:B range from 8:1 to 1:64.

**Claims**

1. Biocide composition comprising 2-methyl-3-isothiazolone and 2-n-octyl-3-isothiazolone in a synergistic ratio which exhibits improved control against fungi and bacteria, wherein said composition is free of halogenated compounds.

2. Composition according to claim 1 wherein the weight ratio of 2-methyl-3-isothiazolone to 2-n-octyl-isothiazolone is from 500:1 to 1:100, preferably from 20:1 to 1:20.

3. Composition according to claim 2 wherein the weight ratio of 2-methyl-3-isothiazolone to 2-n-octyl-isothiazolone is from 10:1 to 1:10, preferably from 3:1 to 1:1.

4. Composition according to any preceding claim which is free of metal salt stabiliser.

5. A solution of a composition as defined in any preceding claim 1 wherein said 2-methyl-3-isothiazolone and 2-n-octyl-3-isothiazolone are dissolved in a solvent system at a concentration of from 1 to 50 parts by weight biocide composition per 100 parts solvent system.

6. A method of controlling microbial growth at or in a locus comprising introducing on, at, or into said locus a composition as defined in any preceding claim.

7. Locus treated against microbial growth, preferably a metal-working fluid, a cosmetic composition or a polymeric emulsion composition, which contains a microbicidally effective amount of a biocide composition as defined in any of claims 1 to 5.

8. Locus according to claim 7 wherein the biocide composition is present at a concentration of from 1 to 400ppm, and the ratio of 2-methyl-3-isothiazolone to 2-n-octyl-isothiazolone in the composition is preferably from 3:1 to 1:1.

9. Use of a biocide composition as defined in any of claims 1 to 5 to inhibit or prevent microbial growth.

**Patentansprüche**

1. Biozidzusammensetzung, enthaltend 2-Methyl-3-isothiazolon und 2-n-Octyl-3-isothiazolon in einem synergistischen Verhältnis, welches eine verbesserte Bekämpfung von Pilzen und Bakterien zeigt, wobei die Zusammensetzung frei von halogenierten Verbindungen ist.

2. Zusammensetzung nach Anspruch 1, wobei das Gewichtsverhältnis von 2-Methyl-3-isothiazolon zu 2-n-Octyl-3-isothiazolon von 500:1 bis 1:100, vorzugsweise von 20:1 bis 1:20 reicht.

9

3. Zusammensetzung nach Anspruch 2, wobei das Gewichtsverhältnis von 2-Methyl-3-isothiazolon zu 2-n-Octyl-3-isothiazolon von 10:1 bis 1:10, vorzugsweise von 3:1 bis 1:1 reicht.

4. Zusammensetzung nach einem der vorstehenden Ansprüche, die frei von Metallsalzstabilisatoren ist.

5. Eine Lösung einer Zusammensetzung wie in einem der vorstehenden Ansprüche definiert, wobei das 2-Methyl-3-isothiazolon und das 2-n-Octyl-3-isothiazolon in einem Lösungsmittelsystem in einer Konzentration von 1 bis 50 Gewichtsteile Biozidzusammensetzung pro 100 Teile Lösungsmittelsystem gelöst sind.

6. Verfahren zur Bekämpfung von mikrobiellem Wachstum an oder in einem Ort, welches die Einführung einer Zusammensetzung wie in einem der vorstehenden Ansprüche definiert, auf, an oder in diesen Ort umfaßt.

7. Ort, der gegen mikrobielles Wachstum behandelt ist, vorzugsweise ein Metallbearbeitungsmedium, eine kosmetische Zusammensetzung oder eine polymere Emulsionszusammensetzung, die eine mikrobizidwirksame Menge einer Biozidzusammensetzung wie in einem der Ansprüche 1 bis 5 definiert, enthält.

8. Ort gemäß Anspruch 7, wobei die Biozidzusammensetzung in einer Konzentration von 1 bis 400 ppm vorhanden ist und das Verhältnis von 2-Methyl-3-isothiazolon zu 2-n-Octyl-3-isothiazolon in der Zusammensetzung vorzugsweise von 3:1 bis 1:1 reicht.

9. Verwendung einer Biozidusammensetzung wie in einem der Ansprüche 1 bis 5 definiert, um mikrobielles Wachstum zu hemmen oder zu verhindern.

**Revendications**

1. Composition biocide comprenant de la 2-méthyl-3-isothiazolone et de la 2-n-octyl-3-isothiazolone en un rapport synergique, qui présente un contrôle amélioré contre des champignons et des bactéries, ladite composition étant exempte de composés halogénés.

2. Composition selon la revendication 1, dans laquelle le rapport pondéral de la 2-méthyl-3-isothiazolone à la 2-n-octyl-3-isothiazolone est de 500:1 à 1:100, de préférence de 20:1 à 1:20.

3. Composition selon la revendication 2, dans laquelle le rapport pondéral de la 2-méthyl-3-isothiazolone à la 2-n-octyl-3-isothiazolone est de 10:1 à 1:10, de préférence de 3:1 à 1:1.

4. Composition selon l'une quelconque des revendications précédentes, qui est exempte de stabilisant à sel de métal.

5. Solution d'une composition telle que définie dans l'une quelconque des revendications précédentes, dans laquelle lesdites 2-méthyl-3-isothiazolone et 2-n-octyl-3-isothiazolone sont dissoutes dans un système solvant à une concentration de 1 à 50 parties en poids de composition biocide pour 100 parties de système solvant.

6. Procédé pour lutter contre une croissance microbienne à ou dans un lieu, comprenant l'introduction sur, à ou dans ledit lieu, d'une composition telle que définie dans l'une quelconque des revendications précédentes.

7. Lieu traité contre une croissance microbienne, de préférence un fluide pour le travail des métaux, une composition cosmétique ou une composition d'émulsion polymère, qui contient une quantité microbicidement efficace d'une composition biocide telle que définie dans l'une quelconque des revendications 1 à 5.

8. Lieu selon la revendication 7, dans lequel la composition biocide est présente à une concentration de 1 à 400 ppm, et le rapport de la 2-méthyl-3-isothiazolone à la 2-n-octyl-3-isothiazolone dans la composition est de préférence de 3:1 à 1:1.

9. Utilisation d'une composition biocide telle que définie dans l'une quelconque des revendications 1 à 5, pour inhiber ou prévenir une croissance microbienne.